# EUROPEAN PATENT APPLICATION

(11) **EP 2 015 540 A2**
(43) Date of publication of application: **14.01.2009**
(21) Application number: 08159516.7
(22) Date of filing: 02.07.2008
(51) Int. Cl.: H04L 29/06

(54) **Security system, terminal, information delivering method, program and recording medium**

(30) Priority: 04.07.2007 JP 2007176249
(71) Applicant: NEC CORPORATION, Minato-ku, Tokyo 108-8001 (JP)
(72) Inventor: Himeno, Hideo c/o NEC Corporation, Tokyo 108-8001 (JP)
(74) Representative: Vossius & Partner

(57) **Abstract**

Legacy systems do not allow the user to change the receiving device easily.
A security system including a multiple number of terminals (4,5,6,10) and a delivering apparatus (2), the terminal (4,5,6,10) including: an acquiring portion for acquiring information to be delivered; a reception portion for accepting a recipient selected from the plural terminals; and a controller (12) which, when the reception portion accepts the recipient, transmits a session initiation request and recipient information representing the recipient to the delivering apparatus (2) and which, when receiving session establishment information that indicates that a communication session has been established between the recipient and its terminal (4,5,6,10), transmits the information to be delivered that was acquired by the acquiring portion to the delivering apparatus (2), wherein the delivering apparatus (2) includes: a manager (2a) which, when receiving the session initiation request and the recipient information, establishes a communication session between the sender of the session initiation request and the recipient and transmits session establishment information that indicates that a communication session between the sender and the recipient has been established, to the sender; and a delivering portion (2b) which, when receiving the information to be delivered from the sender, pushes and delivers the information to be delivered to the recipient.

## Description

This application is based upon and claims the benefit of priority from Japanese patent application No. 2007-176249, filed on July 4, 2007, the disclosure of which is incorporated herein in its entirety by reference.

The present invention relates to a security system, terminal, information delivering method, program and recording medium.

One example of a security system is disclosed in
JP-A- 2007-94895.

In this system, a portable terminal reads information from a train and transmits the information to delivery support center equipment. The delivery support center equipment stores the information. When the train has an accident, the delivery support center equipment pushes and delivers the information to pre-registered communication terminals.

WO2002/027503 describes a home network system.

In this home network system, when the security server receives emergency information, the security server pushes and delivers the emergency information to pre-registered emergency contact addresses.

JP-A- 2000-48050 discloses a multimedia information collection and management system.

This system includes a plurality of multimedia portable terminal devices and a multimedia information collection and management apparatus.

The multimedia portable terminal device collects multimedia information made of image data, sound data and text data and transmits the multimedia information to the multimedia information and management apparatus. Here, the multimedia information is related to security.

When the multimedia information collection and management apparatus accepts multimedia information, it pushes and delivers the multimedia information to pre-registered terminal devices. Accordingly, the terminal device that is the recipient automatically renews the screen without user control and displays updated data in real time.

When a user uses the above system, the user needs to perform a registration operation for registering recipients in advance and a transmission operation for transmitting the information to be delivered.

Accordingly, when the user desires to change recipients every time information to be delivered is transmitted, the user needs to perform both the registration operation and the transmission operation every time information to be delivered is transmitted. That is, the system has the problem of performing poorly when operated.

An exemplary object of the present invention is to provide a security system, terminal, information delivering method, program and recording medium that can solve the above problem of poor performance when operated.

A security system according to an exemplary aspect of the invention includes a plurality of terminals and a delivering apparatus capable of communicating with the plural terminals, each of the terminals including: an acquiring portion for acquiring information to be delivered; a reception portion for accepting a recipient selected from the plural terminals; and, a controller which, when the reception portion accepts the recipient, transmits a session initiation request and recipient information representing the recipient to the delivering apparatus and which, when receiving session establishment information that indicates that a communication session has been established between the recipient and its terminal, transmits the information to be delivered that has been acquired by the acquiring portion to the delivering apparatus, wherein the delivering apparatus includes: a manager which, when receiving the session initiation request and the recipient information, establishes a communication session between the sender of the session initiation request and the recipient and transmits session establishment information that indicates that a communication session between the sender and the recipient has been established, to the sender; and a delivering portion which, when receiving the information to be delivered from the sender, pushes and delivers the information to be delivered to the recipient.

An information delivering method according to an exemplary aspect of the invention is for a security system comprising a plurality of terminals and a delivering apparatus capable of communicating with the plural terminals and includes: acquiring information to be delivered, which is carried out by a particular terminal among said plural terminals; accepting a recipient selected from said plural terminals, which is carried out by said particular terminal; transmitting a session initiation request and recipient information representing the recipient to said delivering apparatus when accepting said recipient, which is carried out by said particular terminal; establishing a communication session between the sender of the session initiation request and the recipient when receiving said session initiation request and said recipient information and transmitting session establishment information that indicates that a communication session between the sender and the recipient has been established, to said sender, which is carried out by said delivering apparatus; transmitting said information to be delivered to said delivering apparatus when receiving session establishment information that indicates that a communication session between said recipient and its terminal has been established, from said delivering apparatus, which is carried out by said particular terminal; and, pushing and delivering the information to be delivered to said recipient when receiving said information to be delivered from said sender, which is carried out by said delivering apparatus.

A terminal according to an exemplary aspect of the invention is capable of communicating with a delivering apparatus and includes: an acquiring portion for acquiring information to be delivered; a reception portion for accepting a recipient; and a controller which, when the reception portion accepts the recipient, transmits a session initiation request and recipient information representing the recipient to the delivering apparatus and which, when receiving session establishment information that indicates that a communication session has been established between the recipient and its terminal, transmits the information to be delivered that has been acquired by the acquiring portion to the delivering apparatus.

An information delivering method according to an exemplary aspect of the invention is a method for a terminal capable of communicating with a delivering apparatus and includes: acquiring information to be delivered; accepting a recipient; transmitting a session initiation request and recipient information representing the recipient to the delivering apparatus when accepting the recipient; and, transmitting the information to be delivered to the delivering apparatus when receiving session establishment information that indicates that a communication session has been established between the recipient and its terminal.

A program according to an exemplary aspect of the invention is for causing a computer to provide the functions of: an acquiring portion for acquiring information to be delivered; a reception portion for accepting a recipient; and a controller which, when the reception portion accepts the recipient, transmits a session initiation request and recipient information representing the recipient to the delivering apparatus and which, when receiving session establishment information that indicates that a communication session has been established between the recipient and its terminal, transmits the information to be delivered that has been acquired by the acquiring portion to the delivering apparatus.

A computer readable recording medium according to an exemplary aspect of the invention is a computer readable recording medium in which a program is embedded, the program causes a computer to provide the functions of: an acquiring portion for acquiring information to be delivered; a reception portion for accepting a recipient; and a controller which, when the reception portion accepts the recipient, transmits a session initiation request and recipient information representing the recipient to the delivering apparatus and which, when receiving session establishment information that indicates that a communication session has been established between the recipient and its terminal, transmits the information to be delivered acquired that has been by the acquiring portion to the delivering apparatus.

The above and other objects, features, and advantages of the present invention will become apparent from the following description with reference to the accompanying drawings which illustrate an example of the present invention.
FIG. 1 is a block diagram showing a security system of one exemplary embodiment of the present invention;
FIG. 2 is an illustrative diagram for explaining one example of the operation of a security system;
FIG. 3 is a block diagram showing one example of multimedia communication terminal 10;
FIG. 4 is a block diagram showing one example of multimedia delivery server 2;
FIG. 5 is a sequence diagram for explaining one example of the operation of a security system;
FIG. 6 is a flow chart for explaining one example of the operation of a security system;
FIG. 7 is a sequence diagram for explaining one example of the operation of a security system;
FIG. 8 is a block diagram showing a security system of another exemplary embodiment of the present invention;
FIG. 9 is a block diagram showing another example of multimedia communication terminal 10; and
FIG. 10 is a block diagram showing another example of multimedia delivery server 2.

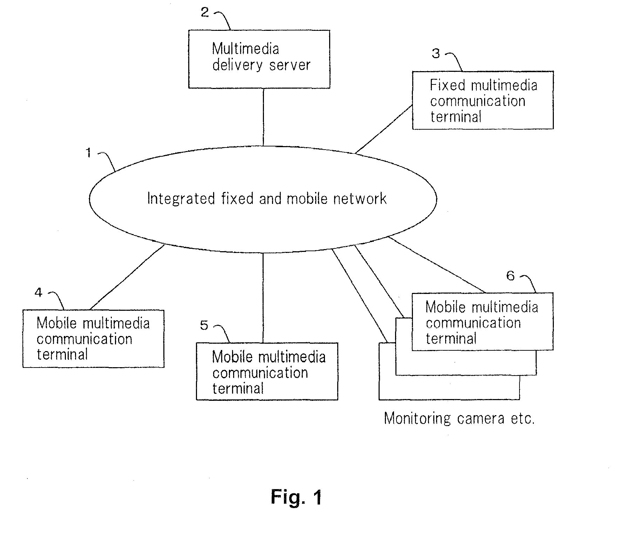

In FIG. 1, the security system includes multimedia delivery server 2, fixed multimedia communication terminal 3, mobile multimedia communication terminals 4, 5 and 6. Multimedia delivery server 2, fixed multimedia communication terminal 3, mobile multimedia communication terminals 4, 5 and 6 can communicate with one another via integrated fixed and mobile network 1.

Integrated fixed and mobile network 1 includes a wired network and a radio network. Multimedia delivery server 2, fixed multimedia communication terminal 3, mobile multimedia communication terminals 4, 5 and 6 are connectable to integrated fixed and mobile network 1.

Multimedia delivery server 2 can be generally called a delivering apparatus. Multimedia delivery server 2 can communicate with fixed multimedia communication terminal 3, mobile multimedia communication terminals 4, 5 and 6 via integrated fixed and mobile network 1.

Fixed multimedia communication terminal 3 is connected to the wired network in integrated fixed and mobile network 1. Here, the number of fixed multimedia communication terminals is not limited to one, but may be plural.

Mobile multimedia communication terminals 4, 5 and 6 are connected to the radio network in integrated fixed and mobile network 1. Here, the number of mobile multimedia communication terminals may be changed as appropriate, and not limited to three.

In integrated fixed and mobile network 1, multimedia delivery server 2 performs session management using SIP (Session Initiation Protocol) and establishes connection between communication terminals. In the exemplary embodiment, each communication terminal and multimedia delivery server 2 performs PoC-type communication with each other.

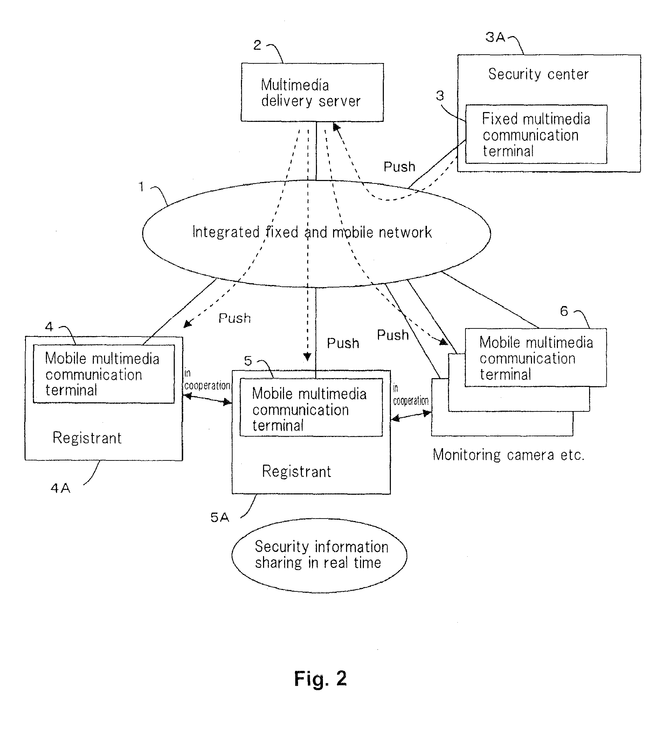

FIG. 2 is an illustrative diagram for explaining one example of the operation of a security system.

In FIG. 2, fixed multimedia communication terminal 3 is assumed to be installed in security center 3A. Mobile multimedia communication terminal 4 is assumed to be carried by registrant 4A. Mobile multimedia communication terminal 5 is assumed to be carried by registrant 5A. Here, the place of installation of fixed multimedia communication terminal 3, the owners of mobile multimedia communication terminals 4 and 5 can be changed as appropriate.

Referring next to FIG. 2, description will be made of the operation in which fixed multimedia communication terminal 3 delivers held information (information to be delivered) to mobile multimedia communication terminals 4, 5 and 6 in a state where all the communication terminals are being connected (in a state where a communication session between the communication terminals is being established).

Fixed multimedia communication terminal 3 transmits stored information to multimedia delivery server 2 by way of integrated fixed and mobile network 1.

When multimedia delivery server 2 receives stored information from fixed multimedia communication terminal 3, multimedia delivery server 2 duplicates the stored information. Then multimedia delivery server 2 delivers the duplication of the stored information all at once to mobile multimedia communication terminals 4, 5 and 6 which are maintaining an established session with fixed multimedia communication terminal 3.

When mobile multimedia communication terminals 4, 5 and 6 receive the delivered information, they automatically display the image corresponding to the information on the screen.

Mobile multimedia communication terminal 4, when multimedia communication terminal 4 acquires additional information after reception of the delivered information, transmits the additional information to multimedia delivery server 2.

When multimedia delivery server 2 receives additional information from mobile multimedia communication terminal 4, multimedia delivery server 2 duplicates the additional information, and delivers the duplication of the additional information all at once to multimedia communication terminals 3, 5 and 6 which are maintaining an established session with mobile multimedia communication terminal 4.

When fixed multimedia communication terminal 3 as well as mobile multimedia communication terminals 5 and 6, receives the delivered information, fixed multimedia communication terminal 3 as well as mobile multimedia communication terminals 5 and 6 automatically display the image corresponding to the information.

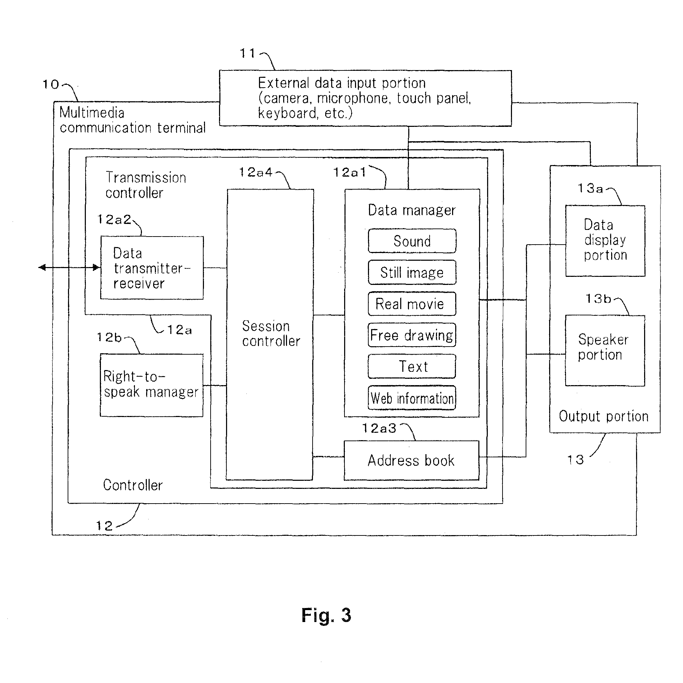

FIG. 3 is a block diagram showing an architecture (which will be referred to hereinbelow as "multimedia communication terminal 10") common to multimedia communication terminals 3 to 6.

Multimedia communication terminal 10 has the function of outputting sounds, images, real movies, free drawings, text, web information etc., on the same software.

In FIG. 3, multimedia communication terminal 10 includes external data input portion 11, controller 12 and output portion 13.

Controller 12 includes transmission controller 12a and right-to-speak manager 12b.

Transmission controller 12a includes data manager 12a1, data transmitter-receiver 12a2, address book 12a3 and session controller 12a4.

Output portion 13 includes data display portion 13a and speaker portion 13b.

External data input portion 11 can be generally called an acquiring means, acquiring portion, reception means and reception portion.

External data input portion 11 includes a plurality of devices (e.g., camera, microphone, touch panel, keyboard etc.) for acquiring information to be delivered from the outside of the terminal.

Accordingly, external data input portion 11 is able to acquire multimedia information of sounds, still images, real movies, free drawings, text information, web information, etc., as the information to be delivered.

Here, multimedia information is not limited to a combination of sounds, still images, real movies, free drawings, text information and web information, but can be changed as appropriate.

Also, external data input portion 11 accepts recipients (e.g., the address of a terminal to be the recipient) selected from a plurality of multimedia communication terminals by the user.

Controller 12 can be generally called a control means.

When a recipient accepts an address at external data input portion 11, controller 12 transmits a session initiation request and recipient information regarding its recipients (e.g., the address of the terminal to be the recipient) to multimedia delivery server 2.

Also, when controller 12 receives session establishment information that indicates establishment of a communication session between itself and a recipient, from multimedia delivery server 2, controller 12 transmits information to be delivered that was acquired by external data input portion 11 to multimedia delivery server 2.

Transmission controller 12a can be generally called a transmission control means.

When a recipient has been accepted by external data input portion 11, transmission controller 12a transmits a session initiation request and recipient information that represents the recipient to multimedia delivery server 2.

When transmission controller 12a receives session establishment information from multimedia delivery server 2, transmission controller 12a provides the session establishment information to right-to-speak manager 12b.

Right-to-speak manager 12b can be generally called right-to-speak management means.

When right-to-speak manager 12b receives session establishment information from multimedia delivery server 2 via transmission controller 12a, right-to-speak manager 12b transmits a right-to-speak acquisition request to multimedia delivery server 2 via transmission controller 12a.

Here, transmission controller 12a, when receiving a right-to-speak acquisition notice from multimedia delivery server 2, transmits information to be delivered that was acquired by external data input portion 11 to multimedia delivery server 2.

When transmission of information to be delivered from transmission controller 12a is complete (specifically, transmission-end information from transmission controller 12a has been accepted), right-to-speak manager 12b transmits a right-to-speak release request to multimedia delivery server 2.

Data manager 12a1 can be generally called a data management means. Data manager 12a1 is a recording medium such as memory etc., for example. Data manager 12a1 stores and manages information to be delivered (multimedia information) that was acquired by external data input portion 11.

Data transmitter-receiver 12a2 can be generally called data transmitting and receiving means.

Data transmitter-receiver 12a2 is connected to integrated fixed and mobile network 1 and performs transmission and reception of information.

Address book 12a3 can be generally called an address book storing means. Address book 12a3 is constructed of a recording medium such as a HDD etc., for example. Address book 12a3 manages information on a group (members) which participates in a session. For example, address book 12a3 stores addresses of other multimedia communication terminals that are capable of participating in a session.

Session controller 12a4 can be generally called a session control means.

When external data input portion 11 accepts a session initiation command from its user, session controller 12a4 accepts the session initiation command via data manager 12a1.

When session controller 12a4 accepts the session initiation command, session controller 12a4 displays addresses of other terminals that are on address book 12a3 as the candidates for the recipient on data display portion 13a.

The user operates the touch panel or keyboard of external data input portion 11, and selects recipients of the information to be delivered, from the addresses of other terminals being displayed.

When external data input portion 11 accepts a recipient, session controller 12a4 transmits a session initiation request and recipient information representing the recipient from data transmitter-receiver 12a2 to multimedia delivery server 2.

When session controller 12a4 receives session establishment information from multimedia delivery server 2 via data transmitter-receiver 12a2, session controller 12a4 provides the session establishment information to right-to-speak manager 12b.

When session controller 12a4 accepts a right-to-speak acquisition request from right-to-speak manager 12b, session controller 12a4 transmits the right-to-speak acquisition request from data transmitter-receiver 12a2 to multimedia delivery server 2.

When a right-to-speak acquisition notice from multimedia delivery server 2 is received, session controller 12a4 transmits the information to be delivered that was acquired by external data input portion 11 and that has been managed by data manger 12a1, to multimedia delivery server 2.

When transmission of the information to be delivered is complete, session controller 12a4 provides transmission end information to right-to-speak manger 12b.

When session controller 12a4 accepts a right-to-speak release request from right-to-speak manager 12b, session controller 12a4 transmits the right-to-speak release request from data transmitter-receiver 12a2 to multimedia delivery server 2.

When session controller 12a4 receives information to be delivered from multimedia delivery server 2 via data transmitter-receiver 12a2, session controller 12a4 stores the information to be delivered into data manager 12a1 and outputs the information to be delivered from output portion 13.

Output portion 13 can be generally called an output means.

When controller 12 receives information to be delivered from multimedia delivery server 2, output portion 13 outputs the information to be delivered.

Data display portion 13a displays images corresponding to display information (e.g., still images, real movies, text information and web information) contained in the information to be delivered that was acquired by external data input 11 and images corresponding to the display information contained in the information to be delivered that was delivered.

Speaker portion 13b outputs sounds corresponding to the audio information contained in the information to be delivered that was acquired by external data input 11 and sounds corresponding to the audio information contained in the information to be delivered that was delivered.

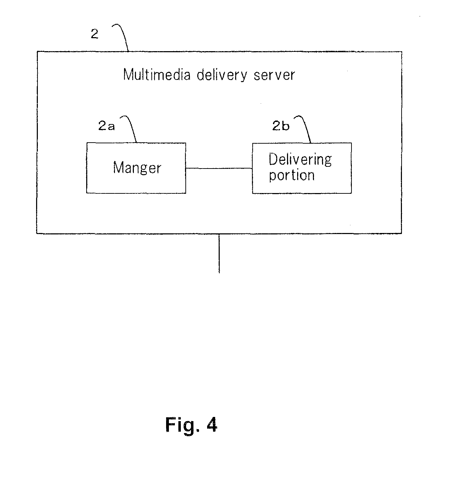

FIG. 4 is a block diagram showing one example of multimedia delivery server 2.

In FIG. 4, multimedia delivery server 2 includes manager 2a and delivering portion 2b.

Manager 2a can be generally called a management means.

When manager 2a receives a session initiation request and recipient information, manager 2a establishes a communication session between the sender of the session initiation request and the recipient indicated by the recipient information. When manager 2a establishes the communication session, manager 2a transmits session establishment information that indicates that the communication session between the sender and the recipient has been established, to the sender.

When manager 2a receives a right-to-speak acquisition request, manager 2a gives the right to speak to the sender of the right-to-speak acquisition request and sends a right-to-speak acquisition notice that represents that the sender has acquired the right-to-speak, to, at least, the sender.

When manager 2a receives a right-to-speak release request, manager 2a releases the right to speak that has been given to the sender of the right-to-speak release request.

Delivering portion 2b can be generally called a delivering means.

When delivering portion 2b receives information to be delivered from the terminal which has transmitted a session initiation request, delivering portion 2b pushes and delivers the information to be delivered to the terminal that was designated as the recipient by the terminal. For example, when delivering portion 2b receives information to be delivered from a sender having the right to speak, delivering portion 2b pushes and delivers the information to be delivered to the terminal that is designated as the recipient by the sender terminal.

Next, the operation will be described.

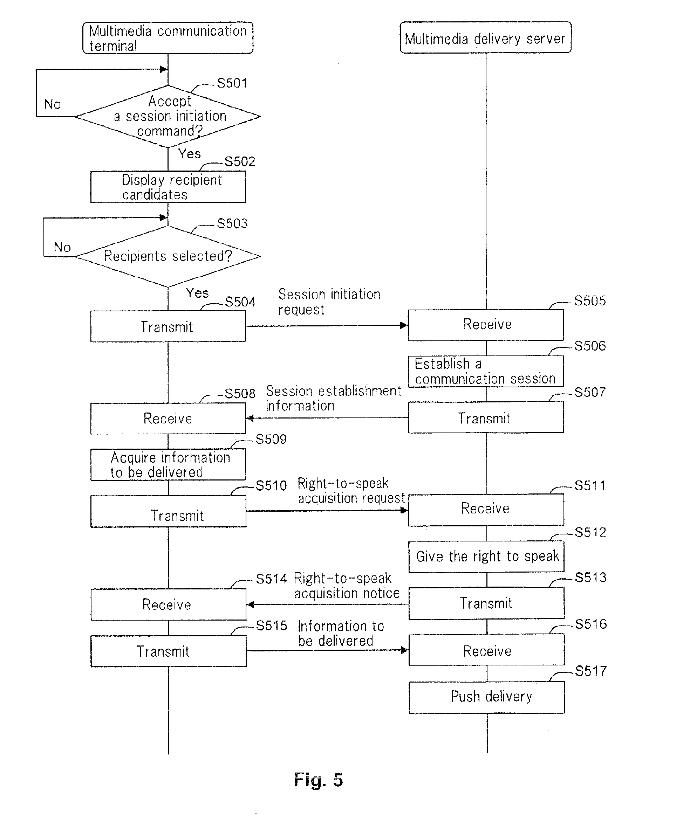

FIG. 5 is a sequence chart for explaining the operation of how multimedia communication terminal 10 shares information.

To begin with, when external data input portion 11 accepts a session initiation command from the user at Step 501, session controller 12a4, in order to start a session, displays the information in address book 12a3 as the candidates for recipient on data display portion 13a and makes the user select a member (terminal) who will be the recipient at Step 502.

As the user selects a member by operating external data input portion 11 at Step 503, session controller 12a4 transmits a session initiation request and recipient information that indicates the selected recipient, from data transmitter-receiver 12a2 to multimedia delivery server 2 at Step 504.

As manager 2a in multimedia delivery server 2 receives the session initiation request and the recipient information at Step 505, manager 2a establishes a communication session between the sender of the session initiation request and the recipient at Step 506.

When a communication session has been established, manager 2a sends session establishment information that indicates that the communication session between the sender and the recipient has been established, to the sender at Step 507.

When, at Step 508, session controller 12a4 receives session establishment information from multimedia delivery server 2, session controller 12a4 provides the session establishment information to right-to-speak manager 12b at Step 509 and stores the information to be delivered that was acquired by external data input portion 11 into data manger 12a1.

Here, data manager 12a1 may store the information to be delivered that was acquired by external data input portion 11 before reception of the session establishment information.

When receiving session establishment information, right-to-speak manager 12b transmits a right-to-speak acquisition request to multimedia delivery server 2 in order to deliver the information to be delivered to the member (recipient) at Step 510.

When manager 2a in multimedia delivery server 2 receives the right-to-speak acquisition request at Step 511, manager 2a gives the right to speak to the sender of the right-to-speak acquisition request at Step 512. For example, manager 2a stores the right to speak in association with its sender.

Subsequently, at Step 513, manager 2a transmits a right-to-speak acquisition notice that indicates that the sender has acquired the right to speak, to, at least, the sender. In the present exemplary embodiment, manager 2a delivers the right-to-speak acquisition notice to all the terminals that are maintaining an established session.

When, at Step 514, session controller 12a4 receives the right-to-speak acquisition notice, session controller 12a4 transmits the information to be delivered that is stored in data manager 12a1 to multimedia delivery server 2 at Step 515.

When, at Step 516, delivering portion 2b of multimedia delivery server 2 receives the information to be delivered, delivering portion 2b refers to manager 2a to confirm whether the sender of the information to be delivered has a right-to-speak, and if the sender has the right-to-speak, delivering portion 2b pushes and delivers the information to be delivered to the terminal that was designated to be the recipient by the sender terminal at Step 517.

When session controller 12a4 receives information to be delivered, transmitted from multimedia delivery server 2 by way of data transmitter-receiver 12a2, session controller 12a4 stores the information to be delivered into data manager 12a1 and automatically displays it on data display portion 13a or outputs it from speaker portion 13b if the information is sound.

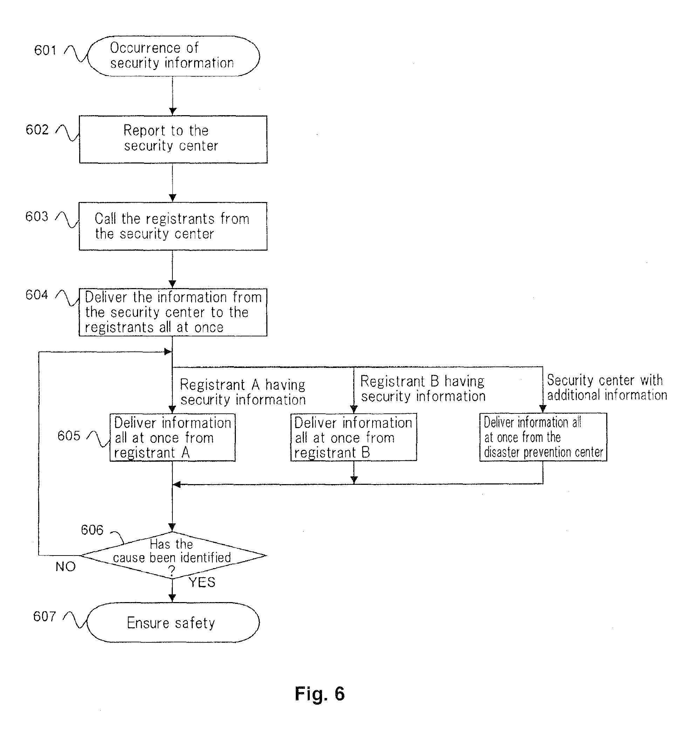

FIG. 6 is a flow chart for explaining one example of the operation when security information, one example of information to be delivered, occurred.

In this case, fixed multimedia communication terminal 3 is assumed to be installed in the security center. Mobile multimedia communication terminal 4 is assumed to be carried by registrant A. Mobile multimedia communication terminal 5 is assumed to be carried by registrant B. Mobile multimedia communication terminal 6 is assumed to be installed at a crime prevention center.

When security information arises at Step 601, it is reported to the security center at Step 602. Then, in the security center, the user operates fixed multimedia communication terminal 3 to select mobile multimedia communication terminals 4 and 5 carried by the members (registrants A and B) working outdoors and mobile multimedia communication terminal 6 (e.g., street monitoring camera etc.) in the crime prevention center, as the recipients.

At Step 603, fixed multimedia communication terminal 3 in the security center transmits the recipient information that indicates its recipients and a session initiation request to multimedia delivery server 2 to demand establishment of a session.

After establishment of a session, at Step 604 fixed multimedia communication terminal 3 in the security center delivers the received crime information to all the outdoor working members that are maintaining an established session, all at once.

After reception of the security information, each security registrant member, if they get eyewitness information or additional information, sends the information from their mobile multimedia communication terminal to all the multimedia communication terminals of the other members all at once at Step 605.

If the cause cannot be identified even after reception of information, the information exchange process (Steps 605 to 606) between members is repeated.

When the cause has been identified, a hazard removal process is done to secure safety at Step 607.

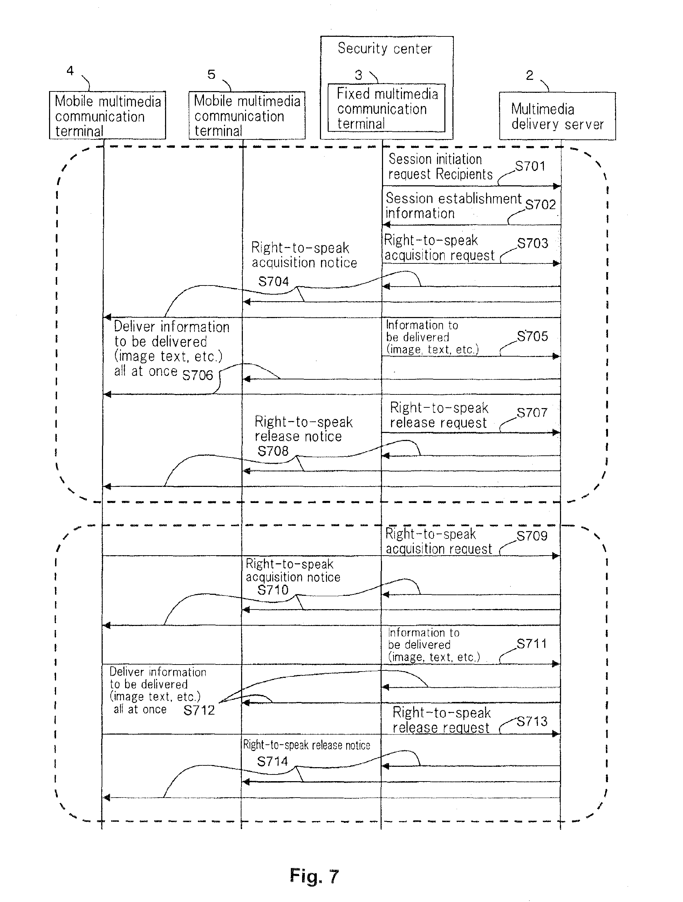

Referring to FIG. 7, the operation of the exemplary embodiment will be described based on the flow of information.

Here, in this case fixed multimedia communication terminal 3 is assumed to be installed at the security center.

In fixed multimedia communication terminal 3 in the security center, the user operates external data input portion 11 to select members, and session controller 12a4 transmits a session initiation request and recipient information regarding recipients, from data transmitter-receiver 12a2 to multimedia delivery server 2 at Step 701.

When receiving the session initiation request and recipient information, manager 2a in multimedia delivery server 2 establishes a communication session between the sender of the session initiation request and the recipient, then transmits session establishment information to the sender at Step 702.

After the session establishment, data manager 12a1 stores information to be delivered that was acquired through external data input portion 11, and right-to-speak manager 12b transmits a right-to-speak request to multimedia delivery server 2 at Step 703.

When receiving the right-to-speak acquisition request, manager 2a in multimedia delivery server 2 gives the right to speak to the sender of the right-to-speak acquisition request and then delivers a right-to-speak acquisition notice that represents that the member (terminal) has obtained the right to speak to all the terminals that are maintaining the established session, all at once.

In fixed multimedia communication terminal 3 in the security center that has obtained the right to speak, session controller 12a4 transmits the information to be delivered that was acquired through external data input portion 11 to multimedia delivery server 2, at Step 705.

When receiving the information to be delivered from the security center, delivering portion 2b of multimedia delivery server 2 transmits the information to be delivered from the security center to terminals 4 and 5 all at once at Step 706.

In fixed multimedia communication terminal 3 in the security center, when right-to-speak manager 12b has completed delivery of information to be delivered, right-to-speak manager 12b transmits a right-to-speak release request to multimedia delivery server 2 at Step 707, in order to release the obtained right to speak.

At Step 708, manager 2a of multimedia delivery server 2 transmits right-to-speak release notices all at once in order to notify all the members of the fact that fixed multimedia communication terminal 3 in the security center has released the right to speak.

Also, when terminal 4 delivers additional information to be delivered, the same procedures (steps 709 to 714) are performed, and additional information to be delivered is transmitted all at once by way of multimedia delivery server 2.

The effects of the present exemplary embodiment will be described.

### 1. Since a push-type communication system is used, multimedia information can be delivered all at once to all the members inside the group.

Since the delivery server is disposed as a center amongst communication terminals, the delivery server is able to deliver the data transmitted from one of a plurality of communication terminals forming a group, all at once to the other members that were selected when the data was transmitted.

Also, because of the use of a push-type communication system, the received data is automatically displayed on the communication terminal without the need of user control of the screen display of the terminal. Accordingly, information can be shared in real time within a group.

The group members can receive information all at once and can implement crime preventive actions and hazard removal actions based on the received information.

Also, each terminal can deliver information while moving.

### 2. Use of mobile multimedia communication terminals enriches information media.

Use of multimedia PoC enables video and multimedia information to be shared outdoors.

In the related art, transceivers have been used as information sharing means in a state of emergency, so as to principally share sound information only. However, there are cases where it is impossible to convey a detailed status through sound only. In the present exemplary embodiment, it is possible to share more specific crime prevention information by sharing still images and real movies.

When multimedia communication terminals have the function of communicating and outputting sounds, images, real movies, free drawings, text, web information, etc., on the same software, it is possible for each multimedia communication terminal to deliver information that it owns to the others by using media suited to the content of information and the owner's status.

### 3. It is possible to exchange information between fixed and mobile multimedia communication terminals.

Use of integrated fixed and mobile network 1 makes it possible to form a group by sharing a session between fixed multimedia communication terminal 3 connected to a fixed network and mobile multimedia communication terminals 4 to 6 connected to a mobile network.

Accordingly, a mobile communication terminal can receive information obtained by the fixed communication terminal in real time even if the mobile terminal is moving.

Further, security information collected on the way can be delivered to all instantaneously, that is, it is possible to exchange information wherever the members may be.

Further, when the multimedia delivery server is adapted to convert the communication speed and media into those suited to the communication band of each terminal, it is possible to realize optimal communication taking into account the radio band through which mobile multimedia communication terminals are used.

The security center is able to collect information using its fixed terminal while each mobile terminal is able to collect information while moving indoors and outdoors. Accordingly, it is possible to exchange information in a more real and highly-qualified fashion by combining the advantage of the functions of both kinds of terminals.

That is, each terminal can collect information by the method suited to its own characteristics and deliver the collected information to the other terminals, in a manner such that, for example, the fixed terminal delivers information obtained from websites to mobile terminals while the mobile terminals deliver real-site information obtained outdoors. Accordingly, it is possible to share a variety of highly qualified detailed information.

By establishing and sharing a session between group members by using SIP that constitutes a PoC system, it is possible to maintain a status in which the owners of communication terminals can communicate continuously.

Accordingly, it is no longer necessary for the receiver to access the mail server, which is the drawback of the mail system, hence it is possible to constantly transmit and receive information between communication terminals in the group after a session has been once established, and achieve improved real-time performance.

A PoC system makes it possible to establish a session common to multiple terminals and enables transmission and reception of information between different communication terminals based on half-duplex communication using a right-to-speak acquiring scheme.

According to the exemplary embodiment, external data input portion 11 accepts a recipient destination, controller 12 establishes a communication session between the recipient and its own terminal and transmits information to be delivered. This information to be delivered is pushed forwards to the recipient.

Accordingly, when the user wants to change recipients every time information to be delivered is transmitted, the user only needs to perform a registration operation of recipients, so as to execute both registration of recipients and transmission of information to be delivered. As a result it is possible to improve operativity.

Further, in the exemplary embodiment, when external data input portion 11 accepted a recipient destination, transmission controller 12a and right-to-speak manager 12b establish a communication session between the recipient and its own terminal, acquire the right to speak and transmit information to be delivered.

In this case, the operation by which a user registers a recipient makes it possible to perform registration of the recipient, acquisition of the right to speak and transmission of information to be delivered. Accordingly, it is possible to further improve operativity.

Further, in the exemplary embodiment, when external data input portion 11 accepts a recipient destination, transmission controller 12a and right-to-speak manager 12b establish a communication session between the recipient and its own terminal, acquire the right to speak, transmit information to be delivered and release the right to speak.

In this case, the operation by which a user registers a recipient makes it possible to perform registration of the recipient, acquisition of the right to speak, transmission of information to be delivered and release of the right to speak. Accordingly, it is possible to further improve operativity.

Further, in the exemplary embodiment, data display portion 13a displays terminals other than its own amongst a plurality of terminals as the candidates for recipient while external data input portion 11 accepts the selected terminal from the recipient candidates as a recipient.

This makes recipient input easy.

Further, in the exemplary embodiment, communication between a plurality of communication terminals and multimedia delivery server 2 is effected based on PoC scheme.

In this case, protocol processing is simplified so as to be able to improve real-time performance.

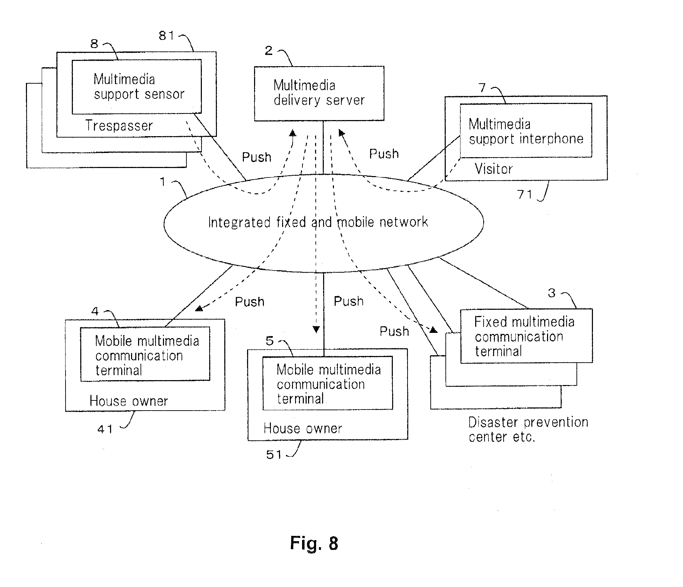

Next, another exemplary embodiment of the present invention will be described with reference to FIG. 8.

FIG. 8 shows an exemplary embodiment when the present security system is used as a home security system.

Here, in FIG. 8, the same components as those shown in FIG. 1 are allotted with the same reference numerals. In the description hereinbelow, the difference from that shown in FIG. 1 will be mainly explained.

In FIG. 8, the home security system includes integrated fixed and mobile network 1, multimedia delivery server 2, fixed multimedia communication terminal 3, mobile multimedia communication terminals 4 and 5, terminal 7 and terminal 8. Fixed multimedia communication terminal 3 is installed at a crime prevention center. Terminal 7 is an interphone installed at an outdoor entrance etc., added with a communication function. Terminal 8 is a sensor for detecting trespassers, added with a communication function.

Next, the operation will be described.

First, interphone 7 set at the entrance is pushed by visitor 71 at the house.

Interphone 7 includes a camera, microphone, etc. As the button of the interphone is pressed, interphone 7 acquires the video and voice of the visitor and transmits the video and voice as information to multimedia delivery server 2.

Multimedia delivery server 2 delivers the video and voice of the visitor to mobile multimedia communication terminals 4 and 5 owned by house owners 41 and 51, the owners of the house, and to fixed multimedia communication terminal 3 installed in the disaster prevention center, all at once.

With this configuration, it is possible for the house owner even when he or she is outdoors to deal with the visitor, or if the visitor is a suspicious person, it is possible for a guard etc. to promptly rush to the scene from the disaster prevention center.

For example, if house owner 41 regards the visitor as a suspicious person, house owner 41 can notify this to necessary members using mobile multimedia communication terminal 4.

Further, since sensors 8 deployed inside and outside of the house have a communication function, if invasion of trespasser 81 into the house is detected by one of sensors 8, the sensor 8 captures the video and voice of the trespasser through its camera and microphone and transmits the video and voice of the trespasser as information to multimedia delivery server 2.

Multimedia delivery server 2 delivers the video and voice of the trespasser to mobile multimedia communication terminals 4 and 5 owned by house owners 41 and 51 and to fixed multimedia communication terminal 3 installed at the disaster prevention center, all at once.

As a result, it is possible to identify the number of trespassers and whether they are armed or not and determine how to deal with them based on the obtained information.

Also, when, for example, monitoring cameras deployed on the streets or in the shop are operated by remote control, it is possible to realize simultaneous delivery of the movies etc. taken at different set points, to owners of the communication terminals.

Multimedia communication terminal 10 shown in FIG. 3 may be realized by dedicated hardware or by a computer that executes the program for realizing the function of multimedia communication terminal 10.

For example, the program for realizing the function of multimedia communication terminal 10 has been recorded on a computer-readable recording medium, and loading of the program recorded in this recording medium may be done by a computer system to execute the program.

In this case, the computer system functions as external data input portion 11, controller 12 and output portion 13 by executing the program recorded in the recording medium.

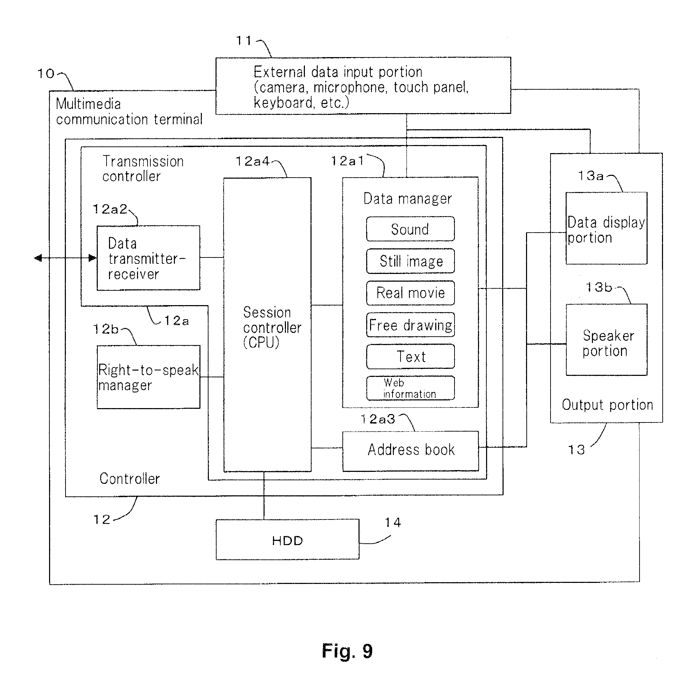

FIG. 9 is a block diagram showing an example in which multimedia communication terminal 10 shown in FIG. 3 is realized by a computer that executes the program for realizing the function of multimedia communication terminal 10. In FIG. 9, the computer-readable recording medium with the program recorded therein uses hard disk drive (HDD) 14.

Also multimedia delivery server 2 shown in FIG. 4 may be realized by dedicated hardware or may be realized by a computer that executes the program for realizing the function of multimedia delivery server 2.

For example, the program for realizing the function of multimedia delivery server 2 has been recorded on a computer-readable recording medium, and loading of the program recorded in this recording medium may be done by a computer system to execute the program.

In this case, the computer system functions as manger 2a and delivering portion 2b by executing the program recorded in the recording medium.

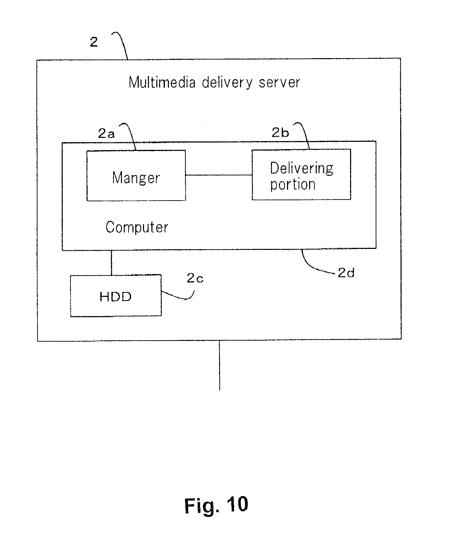

FIG. 10 is a block diagram showing an example in which multimedia delivery server 2 shown in FIG. 4 is realized by a computer that executes the program for realizing the function of multimedia delivery server 2. In FIG. 10, the computer-readable recording medium with the program recorded therein uses hard disk drive (HDD) 2c.

Here, the computer-readable recording medium means a recording medium such as floppy (registered trademark) disk, magneto-optical disk, CD-ROM, etc., or a storage device built in the computer system, such as a hard disk drive etc.

Further, the computer-readable recording medium may be one (transmitted medium or transmitted wave) that dynamically retains the program for a short period such as in a case when the program is transmitted via the internet. Specifically, in this case, a storage medium for retaining the program for a certain period of time, such as a volatile memory inside the computer system to be the server may be included.

In each of the above exemplary embodiments described heretofore, the illustrated configuration is a mere example, and the present invention should not be limited to these configurations.

For example, when the multimedia communication terminal shown in FIG. 3 is used as a terminal dedicated to transmission of information to be delivered, output portion 13 may be omitted.

Also in this case, the multimedia communication terminal includes external data input portion 11 and controller 12. Accordingly, when the user desires to change recipients every time information to be delivered is transmitted, the user only needs to perform a registration operation of recipients using external data input portion 11, so as to, at least, execute both registration of recipients and transmission of information to be delivered. As a result it is possible to improve operativity.

An exemplary advantage according to the present invention is that it is possible to improve operativity.

While an exemplary embodiment of the present invention has been described using specific terms, such description is for illustrative purposes only, and it is to be understood that changes and variations may be made without departing from the spirit or scope of the following claims.

## Claims

1. A security system comprising a plurality of terminals and a delivering apparatus capable of communicating with said plural terminals,
each of said terminals including:
acquiring means for acquiring information to be delivered;
reception means for accepting a recipient selected from said plural terminals; and,
control means for, when said reception means accepts said recipient, transmitting a session initiation request and recipient information representing the recipient to said delivering apparatus and for, when receiving session establishment information that indicates that a communication session has been established between said recipient and its terminal, transmitting the information to be delivered that was acquired by said acquiring means to said delivering apparatus, wherein said delivering apparatus includes:
management means for, when receiving said session initiation request and said recipient information, establishing a communication session between the sender of the session initiation request and the recipient and transmitting session establishment information that indicates that a communication session between the sender and the recipient has been established, to said sender; and
delivering means for, when receiving said information to be delivered from said sender, pushing and delivering the information to be delivered to said recipient.

2. The security system according to claim 1, wherein said control means includes:
right-to-speak management means for, when receiving said session establishment information from said delivering apparatus, transmitting a right-to-speak acquisition request to said delivering apparatus; and,
transmission control means for, when receiving a right-to-speak acquisition notice from said delivering apparatus, transmitting the information to be delivered that was acquired by said acquiring means to said delivering apparatus,
said management means, when receiving said right-to-speak acquisition request, further gives the right to speak to the sender of the right-to-speak acquisition request and transmits said right-to-speak acquisition notice to, at least, the sender, and
said delivering means, when receiving said information to be delivered from said sender having the right to speak, pushes and delivers the information to be delivered to said recipient.

3. The security system according to claim 2, wherein said right-to-speak management means, when transmission of said information to be delivered has been completed, further transmits a right-to-speak release request to said delivering apparatus, and
said management means, when receiving said right-to-speak release request, releases the right to speak release request that has been given to the sender of the right-to-speak release request.

4. The security system according to any one of claims 1 to 3, further comprising output means for displaying terminals other than the own terminal among said plural terminals, as the recipient candidates, wherein said reception means accepts the candidate selected from the recipient candidates as the recipient.

5. The security system according to any one of claims 1 to 4, wherein said plural terminals and said delivering apparatus communicate with one another based on a PoC scheme.

6. A terminal capable of communicating with a delivering apparatus, comprising:
acquiring means for acquiring information to be delivered;
reception means for accepting a recipient; and
control means for, when said reception means accepts said recipient, transmitting a session initiation request and recipient information representing the recipient to said delivering apparatus and for, when receiving session establishment information that indicates that a communication session has been established between said recipient and its terminal, transmitting the information to be delivered that was acquired by said acquiring means to said delivering apparatus.

7. The terminal according to claim 6, wherein said control means includes:
right-to-speak management means for, when receiving said session establishment information from said delivering apparatus, transmitting a right-to-speak acquisition request to said delivering apparatus; and,
transmission control means for, when receiving a right-to-speak acquisition notice from said delivering apparatus, transmitting the information to be delivered that was acquired by said acquiring means to said delivering apparatus.

8. The terminal according to claim 7, wherein said right-to-speak management means, when transmission of said information to be delivered has been completed, further transmits a right-to-speak release request to said delivering apparatus,

9. The terminal according to any one of claims 6 to 8,further comprising output means for displaying terminals other than its terminal among said plural terminals that can commutate with said delivering apparatus, as the recipient candidates, wherein said reception means accepts the candidate selected from the recipient candidates as the recipient.

10. The terminal according to any one of claims 6 to 9, which communicates with said delivering apparatus based on a PoC scheme.

11. An information delivering method for a security system comprising a plurality of terminals and a delivering apparatus capable of communicating with said plural terminals, comprising:
acquiring information to be delivered, which is carried out by a particular terminal among said plural terminals;
accepting a recipient selected from said plural terminals, which is carried out by said particular terminal;
transmitting a session initiation request and recipient information representing the recipient to said delivering apparatus when accepting said recipient, which is carried out by said particular terminal;
establishing a communication session between the sender of the session initiation request and the recipient when receiving said session initiation request and said recipient information and transmitting session establishment information that indicates that a communication session between the sender and the recipient has been established, to said sender, which is carried out by said delivering apparatus;
transmitting said information to be delivered to said delivering apparatus when receiving session establishment information that indicates that a communication session between said recipient and the own terminal has been established, from said delivering apparatus, which is carried out by said particular terminal; and,
pushing and delivering the information to be delivered to said recipient when receiving said information to be delivered from said sender, which is carried out by said delivering apparatus.

12. The information delivering method according to claim 11, wherein said transmission of said information to be delivered to said delivering apparatus includes:
transmitting a right-to-speak acquisition request to said delivering apparatus when receiving said session establishment information from said delivering apparatus; and
transmitting said information to be delivered to said delivering apparatus when receiving a right-to-speak acquisition notice from said delivering apparatus,
further comprising, when receiving said right-to-speak acquisition request, giving the right to speak to the sender of the right-to-speak acquisition request and transmitting said right-to-speak acquisition notice to, at least, the sender, which is carried out by said delivering apparatus, and
said delivering includes pushing and delivering the information to be delivered to said recipient when receiving said information to be delivered from said sender having the right to speak, which is carried out by said delivering apparatus.

13. An information delivering method for a terminal capable of communicating with a delivering apparatus, comprising:
acquiring information to be delivered;
accepting a recipient;
transmitting a session initiation request and recipient information representing the recipient to said delivering apparatus when accepting said recipient; and,
transmitting said information to be delivered to said delivering apparatus when receiving session establishment information that indicates that a communication session has been established between said recipient and its terminal.

14. The information delivering method according to claim 13, wherein transmitting said information to be delivered to said delivering apparatus includes:
transmitting a right-to-speak acquisition request to said delivering apparatus when receiving said session establishment information from said delivering apparatus; and,
transmitting said information to be delivered to said delivering apparatus when receiving a right-to-speak acquisition notice from said delivering apparatus.

15. A program for causing a computer to provide the functions of:
acquiring means for acquiring information to be delivered;
reception means for accepting a recipient; and
control means for, when said reception means accepts said recipient, transmitting a session initiation request and recipient information representing the recipient to said delivering apparatus and for, when receiving session establishment information that indicates that a communication session has been established between said recipient and its terminal, transmitting the information to be delivered that was acquired by said acquiring means to said delivering apparatus.

16. A computer-readable recording medium in which a program is embedded, the program for causing a computer to provide the functions of:
acquiring means for acquiring information to be delivered;
reception means for accepting a recipient; and
control means for, when said reception means accepts said recipient, transmitting a session initiation request and recipient information representing the recipient to said delivering apparatus and for, when receiving session establishment information that indicates that a communication session has been established between said recipient and its terminal, transmitting the information to be delivered that was acquired by said acquiring means to said delivering apparatus.
